# FASCICULE DE BREVET EUROPEEN

(11) **EP 4 561 904 B1**
(45) Date de publication et mention de la délivrance du brevet: **02.09.2026**
(21) Numéro de dépôt: 23776083.0
(22) Date de dépôt: 27.07.2023
(51) Int. Cl.: B64D 27/24, B64D 35/08, B64D 45/00

(54) **SURVEILLANCE D'UN SYSTÈME PROPULSIF D'UN AÉRONEF**
ÜBERWACHUNG EINES FLUGZEUGANTRIEBSSYSTEMS
MONITORING OF AN AIRCRAFT PROPULSION SYSTEM

(30) Priorité: 29.07.2022 FR 2207897
(43) Date de publication de la demande: 04.06.2025
(73) Titulaire: Safran Helicopter Engines, 64510 Bordes (FR)
(72) Inventeur: LEMAY, David Bernard Martin, 77550 MOISSY-CRAMAYEL (FR); MARIN, Jean-Philippe Jacques, 77550 MOISSY-CRAMAYEL (FR); THIRIET, Romain Jean Gilbert, 77550 MOISSY-CRAMAYEL (FR)
(74) Mandataire: Gevers & Orès
(86) Numéro de dépôt international: PCT/FR2023/051197
(87) Numéro de publication internationale: WO 2024/023462

(56) Documents cités:
- WO-A2-2006/081334
- FR-A1- 3 039 614
- FR-A1- 3 116 044
- US-A1- 2001 044 679

## Description

### Domaine technique de l'invention

L'invention se réfère aux systèmes propulsifs hybrides pour aéronefs, et plus particulièrement à l'hybridation parallèle d'un hélicoptère.

### Arrière-plan technologique

Un système propulsif non-hybride comporte classiquement une chaîne thermique d'entraînement d'un propulseur tournant de l'aéronef, par exemple d'entraînement du rotor principal et du rotor d'anti-couple dans le cas d'un hélicoptère.

Le système propulsif présente plusieurs régimes de certification définissant une limite de puissance. Il est connu de calculer pour chaque régime une marge disponible de puissance. Pour cela, une marge de puissance est calculée pour plusieurs paramètres de la chaîne thermique, et la plus petite est sélectionnée.

L'aéronef comporte alors un indicateur de pilotage destiné à afficher au pilote une information synthétique lui permettant de connaître à tout instant la marge de puissance disponible avant d'atteindre les limites de puissance des régimes certifiés. Cet indicateur est appelé indicateur de première limite (IPL) et renseigne le pilote sur la marge de puissance qui lui reste.

Par ailleurs, un système propulsif hybride comporte, en redondance de la chaîne thermique, une chaîne électrique d'entraînement du propulseur tournant. Cette redondance permet l'atterrissage de l'aéronef dans des conditions de sécurité satisfaisantes, en cas de panne de la chaîne thermique. Un exemple d'application caractéristique est un système propulsif hybride parallèle d'hélicoptère, composé d'un turbomoteur et d'une motorisation électrique entraînant tous les deux les rotors principaux et d'anti-couple. Néanmoins l'invention s'applique plus généralement à un système propulsif hybride d'aéronef qui ne possède pas nécessairement de tels rotors.

L'état de l'art est illustré par le document FR 3 116 044 A1, qui a trait à la détermination d'une marge de puissance d'une chaîne propulsive hybride.

L'invention a pour but de mieux adapter le calcul des marges de puissance au cas d'un système propulsif hybride.

### Résumé de l'invention

Il est donc proposé un procédé de surveillance d'un système propulsif d'un aéronef, selon la revendication 1.

De façon optionnelle, le système propulsif présente au moins un régime de fonctionnement certifié qui définit un seuil pour chacun de plusieurs paramètres de la chaîne thermique, le procédé comportant :
- un calcul d'une marge de chaque paramètre de la chaîne électrique ; et
- une détermination de la plus petite des marges des paramètres de la chaîne thermique, cette plus petite marge étant prise comme marge de la chaîne thermique.

De façon optionnelle également, si la source de stockage électrique n'est pas suffisamment chargée, la marge du paramètre de la chaîne électrique est prise égale à zéro,

De façon optionnelle également, si la source de stockage électrique n'est pas suffisamment chargée, la marge du paramètre de la chaîne électrique est prise égale à l'état de charge divisée par la durée de fourniture de puissance prédéfinie.

De façon optionnelle également, le procédé comporte en outre une transmission de la marge de la chaîne thermique au dispositif d'affichage à un pilote de l'aéronef.

Il est également proposé un programme d'ordinateur téléchargeable depuis un réseau de communication et/ou enregistré sur un support lisible par ordinateur, le programme comprenant les instructions pour l'exécution des étapes d'un procédé selon l'invention, lorsque ledit programme est exécuté sur un ordinateur.

Il est également proposé un aéronef selon la revendication 7.

### Brève description des figures

L'invention sera mieux comprise à l'aide de la description qui va suivre, donnée uniquement à titre d'exemple et faite en se référant aux dessins annexés dans lesquels :
- la figure 1 est une vue fonctionnelle d'un aéronef dans lequel l'invention est mise en œuvre,
- la figure 2 est un schéma-bloc d'un procédé de surveillance d'un système propulsif de l'aéronef de la figure 1, et
- la figure 3 est une vue d'un indicateur de première limite de l'aéronef de la figure 1.

### Description détaillée de l'invention

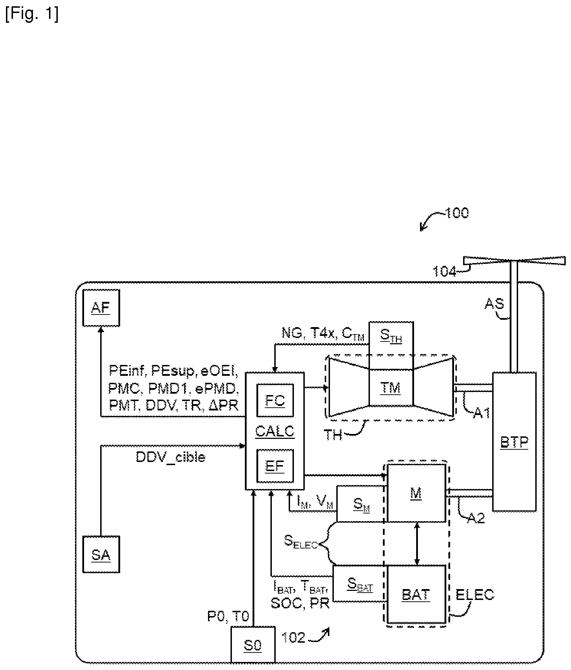

En référence à la figure 1, un exemple d'un aéronef 100 dans lequel l'invention est mise en oeuvre, va à présent être décrit.

L'aéronef 100 peut être à voilure fixe ou bien tournante (comme dans le cas d'un hélicoptère), ou bien un aéronef à décollage et atterrissage verticaux (de l'anglais « Vertical Take-Off & Landing aircrafts », également désigné par l'acronyme VTOL).

L'aéronef comporte ainsi un système propulsif 102.

Le système propulsif 102 comporte au moins un propulseur tournant 104. Dans le cas d'un hélicoptère, le système propulsif 102 comporte par exemple deux propulseurs tournants : un rotor principal conçu pour permettre la sustentation, le pilotage et la propulsion, et un rotor anti-couple conçu pour contrer un couple induit par le rotor principal. Alternativement, le propulseur tournant 104 peut être une hélice ou bien une soufflante.

Le système propulsif 102 comporte en outre une chaîne thermique TH d'entraînement de chaque propulseur tournant 104. Dans l'exemple illustré, la chaîne thermique TH comporte un seul turbomoteur TM. Alternativement, la chaîne thermique TH pourrait comporter plusieurs turbomoteurs.

En particulier dans le cas d'un hélicoptère, le système propulsif 102 comporte en outre par exemple une boîte de transmission principale BTP comportant un arbre d'entrée A1 connecté à la chaîne thermique TH et un arbre de sortie AS connecté au propulseur tournant 104.

Le système propulsif 102 comporte en outre une chaîne électrique ELEC d'entraînement de chaque propulseur tournant 104. La chaîne électrique ELEC comporte par exemple une source de stockage électrique BAT et une machine électrique M connectée à la source de stockage électrique BAT. La source de stockage électrique BAT peut comporter une ou plusieurs sources électriques élémentaire, par exemple une ou plusieurs batteries chimiques ou bien tout autre type de stockeur d'énergie électrique. De manière similaire, la machine électrique M peut comporter une ou plusieurs machines électriques élémentaires. La machine électrique M est conçue pour fonctionner sélectivement, d'une part, en moteur pour recevoir de la puissance électrique de la source de stockage électrique BAT et, d'autre part, en générateur pour fournir de la puissance électrique à la source de stockage électrique BAT pour recharger cette dernière. Alternativement, la machine électrique M peut être conçue pour uniquement fonctionner en moteur.

Du fait de la présence de la chaîne thermique TH et de la chaîne électrique ELEC, le système propulsif 102 est ainsi qualifié d'hybride.

Dans le cas d'une hybridation dite parallèle comme illustrée, la boîte de transmission principale BTP comporte un deuxième arbre d'entrée A2 connecté à la chaîne électrique ELEC, en particulier à la machine électrique M.

L'aéronef 100 comporte en outre un calculateur CALC de commande du système propulsif 102, plus précisément de la chaîne thermique TH et de la chaîne électrique ELEC.

Le système propulsif 102 présente au moins un régime de fonctionnement certifié. Cela signifie que le motoriste garantit, pour chaque régime, que chacune de la chaîne thermique TH et de la chaîne électrique ELEC est capable de fournir une puissance maximum (appelée limite) associée à ce régime, éventuellement pendant une durée prédéfinie associée à ce régime. Cette durée est finie et peut être nulle. En l'absence de durée associée, le constructeur garantit que la puissance maximum peut être atteinte aussi longtemps que souhaitée, en tout cas pendant une durée très longue, par exemple la durée typique d'une mission.

Les puissances maximum et les durées peuvent être différentes pour la chaîne thermique TH et pour la chaîne électrique ELEC. Ainsi, de manière générale, chaque régime définit, d'une part, pour la chaîne thermique TH, une puissance maximum et éventuellement une durée, et, d'autre part, pour la chaîne électrique ELEC, une puissance maximum et éventuelle une durée.

Chaque limite peut être "pilotée", c'est-à-dire indicative. C'est le pilote qui est alors en charge de respecter cette limite selon les informations du manuel d'utilisation du système propulsif 102. Si le pilote sollicite une puissance supérieure à la limite pilotée, le calculateur CALC est conçu pour permettre au système propulsif 102 de dépasser la limite pilotée.

Chaque limite peut alternativement être « contrôlée », c'est-à-dire que le calculateur CALC est conçu pour empêcher leur franchissement, même si le pilote le sollicite. Les limites contrôlées sont parfois appelées « butées ».

Par exemple, le système propulsif 102 peut présenter un ou plusieurs des régimes suivants.

Le système propulsif 102 peut présenter un régime continu C, associé à une limité pilotée PMC (Puissance Maximum Continue) qui est la puissance maximum que la chaîne thermique TH est capable de délivrer de façon continue, c'est-à-dire sur toute la durée d'une mission, et même de plusieurs missions de l'aéronef 100.

Le système propulsif 102 peut présenter un régime maximum de décollage D, associé à une limite pilotée PMD_{TH} (PMD pour Puissance Maximum de Décollage) qui est la puissance que la chaîne thermique TH peut délivrer pendant une durée prédéfinie T_PMD_{TH} et à une limite pilotée PMD_{ELEC} qui est la puissance que la chaîne électrique ELEC peut délivrer pendant une durée prédéfinie T_PMD_{ELEC}. Les durées T_PMD_{TH} et T_PMD_{ELEC} sont généralement de quelques minutes (communément de l'ordre de quinze à trente minutes).

Le système propulsif 102 peut présenter un régime maximum transitoire T, associé à une limité pilotée PMT_{TH} (PMT pour Puissance Maximum Transitoire) qui est la puissance maximum instantanée que la chaîne thermique TH peut délivrer et une limité pilotée PMT_{ELEC} qui est la puissance maximum instantanée que la chaîne électrique ELEC peut délivrer. Pour le régime maximum transitoire T, la durée pour la chaîne thermique TH et la durée pour la chaîne électrique sont toutes les deux nulles.

Pour le calcul de différentes informations à afficher au pilote, comme cela sera expliqué plus en détail par la suite, l'aéronef 100 comporte plusieurs systèmes de mesure.

Plus précisément, l'aéronef 100 comporte tout d'abord un système S_{TH} de surveillance de la chaîne thermique TH, conçu pour mesurer au moins un paramètre de la chaîne thermique TH impactant la puissance fournie par la chaîne thermique TH. Il s'agit par exemple d'une vitesse NG d'un générateur de gaz du turbomoteur TM et/ou d'une température T4x de gaz entraînant une ou des turbines de puissance du turbomoteur TM et/ou d'un couple C_{TM} fourni par le ou les turbomoteurs de la chaîne thermique TH.

L'aéronef 100 comporte en outre un système S_{ELEC} de surveillance de la chaîne électrique ELEC, conçu pour mesurer au moins un paramètre de la chaîne électrique ELEC impactant la puissance fournie par la chaîne électrique ELEC.

Les paramètres impactant la puissance fournie par la chaîne thermique TH et la puissance fournie par la chaîne électrique ELEC, sont appelés par la suite paramètres principaux.

Le système de mesure S_{ELEC} comporte par exemple un système S_{BAT} de mesure d'au moins un paramètre de la source de stockage électrique BAT, comme un courant I_{BAT} fourni par la source de stockage électrique BAT à la machine électrique M et/ou un état de charge SOC de la source de stockage électrique BAT. Le système de mesure S_{ELEC} comporte par exemple, à la place ou bien en complément du système de mesure S_{BAT}, un système S_{M} de mesure d'au moins un paramètre de la machine électrique M, comme un couple C_{M} fourni par la machine électrique M. Le système de mesure S_{ELEC} est en outre par exemple conçu pour mesurer au moins un autre paramètre dit auxiliaire de la chaîne électrique ELEC, comme une température T_{BAT} de la source de stockage électrique BAT mesurée par le système de mesure S_{BAT} et/ou une puissance de recharge PR de la source de stockage électrique BAT. La puissance de recharge PR est par exemple calculée à partir du courant I_{BAT} de la source de stockage électrique BAT et d'une tension mesurée aux bornes de la source de stockage électrique BAT.

L'aéronef 100 comporte en outre par exemple un système de surveillance externe S0, conçu pour mesurer au moins un paramètre atmosphérique, autour de l'aéronef 100, comme une pression atmosphérique P0 et/ou une température atmosphérique T0.

L'aéronef 100 comporte en outre un dispositif d'affichage AF conçu pour afficher les informations transmises par le calculateur CALC.

L'aéronef 100 peut en outre comporter un dispositif de saisie SA conçu pour permettre au pilote de saisir des informations pour le calculateur CALC, en particulier une durée de vie cible DDV _cible. Le dispositif de saisie SA peut revêtir plusieurs formes, comme un bouton de réglage (type potentiomètre) d'un tableau de bord de l'aéronef, un clavier de saisie sur un écran, etc.

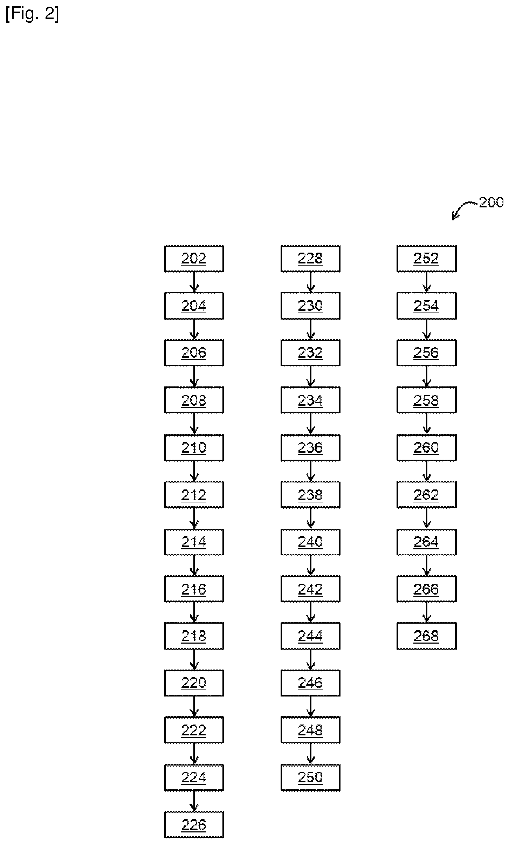

En référence à la figure 2, un exemple d'un procédé 200 selon l'invention, de surveillance du système propulsif 102, va à présent être décrit.

Au cours d'une étape 202, le calculateur CALC reçoit une mesure de chaque paramètre.

Dans l'exemple illustré, le calculateur CALC reçoit ainsi :
- des mesures NG_m, T4x_m, C_{TM}_m des paramètres principaux NG, T4x, C_{TM} de la chaîne thermique TH,
- des mesures I_{BAT}_m, C_{M}_m des paramètres principaux I_{BAT}, C_{M} de la chaîne électrique ELEC,
- des mesures T_{BAT}_m, SOC_m des paramètres auxiliaires T_{BAT}, SOC de la chaîne électrique ELEC, et
- des mesures P0_m, T0_m des paramètres atmosphériques P0, T0.

Au cours d'une étape 204, le calculateur CALC calcule, pour chaque régime et pour chaque paramètre principal de la chaîne thermique TH, un seuil en-dessous duquel le paramètre principal considéré doit rester pour que la chaîne thermique TH fournisse une puissance inférieure à la puissance maximale du régime considéré pour la chaîne thermique TH. Ce calcul est par exemple réalisé à partir d'un ou plusieurs autres paramètres mesurés, par exemple le ou les paramètres atmosphériques.

Dans l'exemple illustré, le calculateur CALC calcule ainsi, par exemple à partir des mesures P0_m, T0_m :
- pour le régime continu C, les seuils NG_C, T4x_C et C_{TM}_C,
- pour le régime de décollage D, les seuils NG_D, T4x_D et C_{TM}_D, et
- pour le régime transitoire T, les seuils NG_T, T4x_T et C_{TM}_T.

Au cours d'une étape 206, le calculateur CALC calcule, pour chaque régime et pour chaque paramètre principal de la source thermique TH, une différence entre la mesure et le seuil du paramètre principal considéré, cette différence formant une marge du paramètre principal considéré.

Dans l'exemple illustré, le calculateur CALC calcule :
- pour le régime continu C, les marges ΔNG_C, ΔT4x_C et ΔC_{TM}_C,
- pour le régime de décollage D, les marges ΔNG_D, ΔT4x_D et ΔC_{TM}_D, et
- pour le régime transitoire T, les marges ΔNG_T, ΔT4x_T et ΔC_{TM}_T.

Au cours d'une étape 208, le calculateur CALC calcule, pour chaque régime avec une durée finie, éventuellement nulle, et pour chaque paramètre principal de la chaîne électrique ELEC, un seuil en-dessous duquel le paramètre principal considéré doit rester pour que la chaîne électrique ELEC fournisse une puissance inférieure la puissance maximale du régime considéré pour la chaîne électrique ELEC. Ce calcul est par exemple réalisé à partir d'un ou plusieurs autres paramètres mesurés, par exemple le ou les paramètres atmosphériques.

Dans l'exemple illustré, le calculateur CALC calcule, par exemple à partir des mesures SOC_m, T_{BAT}_m, P0_m et T0_m :
- pour le régime de décollage D, les seuils I_{BAT}_D et C_{M}_D, et
- pour le régime transitoire T, les seuils I_{BAT}_T et C_{M}_T.

Ainsi, aucun seuil n'est calculé pour le régime continu C pour la chaîne électrique ELEC.

Au cours d'une étape 210, le calculateur CALC calcule, pour chaque régime avec une durée finie, éventuellement nulle, et pour chaque paramètre principal de la chaîne électrique ELEC, une différence entre la mesure et le seuil du paramètre principal considéré, cette différence formant une marge intermédiaire du paramètre principal considéré.

Dans l'exemple illustré, le calculateur CALC calcule :
- pour le régime de décollage D, les marges intermédiaires ΔI_{BAT}_D' et ΔC_{M}_D', et
- pour le régime transitoire T, les marges intermédiaires ΔI_{BAT}_T' et ΔC_{M}_T'.

Au cours d'une étape 212, le calculateur CALC convertit les marges calculées aux étapes 206 et 210, dans une même unité pouvant être celle de n'importe quelle grandeur physique. De préférence, cette grandeur physique est « parlante » pour le pilote et directement liée à son pilotage. L'unité choisie est par exemple la puissance, de sorte que les marges sont converties en marges de puissance. Ainsi converties, les marges peuvent être comparées et/ou sommées. La puissance est par exemple la puissance mécanique fournie.

Par exemple, la marge du courant I_{BAT} peut être exprimée en puissance en la multipliant par une tension de la source de stockage électrique BAT et par un rendement de la machine électrique M.

Toujours par exemple, la marge du couple C_{M} peut être exprimée en puissance en la multipliant par une vitesse de rotation de la machine électrique M.

Pour les paramètres de la chaîne thermique TH, il peuvent par exemple être convertis en puissance en utilisant un modèle du turbomoteur TM et en supposant tous les autres paramètres de ce moteur constant.

En outre, au cours de l'étape 212, les seuils des paramètres principaux de la chaîne électrique ELEC (les seuils des paramètres I_{BAT} et C_{M} dans l'exemple illustré) sont également convertis dans l'unité choisie, par exemple en puissance.

Au cours d'une étape 214, pour chaque régime avec une durée finie non nulle associée à la chaîne électrique ELEC, le calculateur CALC vérifie si la source de stockage électrique BAT est suffisamment chargée pour que la chaîne électrique ELEC puisse fournir le seuil en puissance de ce paramètre, pendant toute la durée associée. En particulier, pour évaluer la charge de la source de stockage électrique BAT, il est possible d'utiliser par exemple la mesure SOC_m de l'état de charge SOC de la source de stockage électrique BAT. Alternativement, une mesure d'un état d'énergie SOE (de l'anglais « State Of Energy ») pourrait être utilisé.

Par exemple pour le régime de décollage D et pour le courant I_{BAT}, le calculateur CALC vérifie si : SOC ≥ I_{BAT}_D x T_PMD_{ELEC}, I_{BAT}_D étant exprimé en puissance et T_PMD_{ELEC} étant la durée maximum du régime de décollage D pour la chaîne électrique.

Si la source de stockage électrique BAT est suffisamment chargée, la marge du paramètre principal considéré est alors prise égale à sa marge intermédiaire. Dans ce cas, par exemple, la marge ΔI_{BAT}_D du paramètre I_{BAT} est alors prise égale à la marge intermédiaire ΔI_{BAT}_D'.

Sinon, la marge du paramètre principal considéré est prise inférieure à la marge intermédiaire.

Dans un premier exemple, la marge du paramètre est prise nulle. Dans ce cas, par exemple, si SOC < I_{BAT}_D x T_PMD_{ELEC}, la marge ΔI_{BAT}_D du paramètre I_{BAT} est prise nulle.

Dans un deuxième exemple, si la source de stockage électrique BAT n'est pas suffisamment chargée, la marge du paramètre est prise égale à l'état de charge SOC divisé par la durée associée au régime pour la chaîne électrique ELEC. Dans ce cas, par exemple, si SOC < I_{BAT}_D x T_PMD_{ELEC}, la marge ΔI_{BAT}_D du paramètre I_{BAT} est prise égale à SOC/T_PMD_{ELEC}.

Au cours d'une étape 216, pour chaque régime avec une durée nulle associée, la marge du paramètre principal considéré est alors prise égale à sa marge intermédiaire. Dans ce cas, par exemple, la marge ΔI_{BAT}_T du paramètre I_{BAT} est alors prise égale à la marge intermédiaire ΔI_{BAT}_T'.

Au cours d'une étape 218, lorsque plusieurs paramètres de la chaîne thermique TH sont utilisés, le calculateur CALC compare, pour chaque régime, les marges de ces paramètres pour sélectionner la plus petite. La marge sélectionnée est prise comme marge de la chaîne thermique TH.

Par exemple, la marge de la chaîne thermique TH est notée PMC pour le régime continu C, PMD1 pour le régime de décollage D et PMT1 pour le régime transitoire T.

Au cours d'une étape 220, lorsque plusieurs paramètres de la chaîne électrique ELEC sont utilisés, le calculateur CALC compare, pour chaque régime, les marges de ces paramètres pour sélectionner la plus petite.

Par exemple, la marge de la chaîne électrique ELEC est notée ΔP_{ELEC}_PMD pour le régime de décollage D et ΔP_{ELEC}_PMT pour le régime transitoire T.

Au cours d'une étape 222, le calculateur CALC additionne, pour chaque régime, la plus petite marge pour la chaîne thermique TH avec la plus petite marge pour la chaîne électrique ELEC, cette addition formant une marge totale du système propulsif 102 pour le régime considéré.

Par exemple, la marge totale est notée ePMD pour le régime de décollage D et vaut : ePMD = PMD1 + ΔP_{ELEC}_PMD. De façon similaire, la marge totale est notée ePMT pour le régime transitoire T et vaut : ePMT = PMT1 + ΔP_{ELEC}_PMT

Au cours d'une étape 224, le calculateur CALC transmet, au dispositif d'affichage AF, la marge totale associée à chaque régime. En outre, le calculateur CALC peut transmettre, pour chaque régime, la marge pour la chaîne thermique TH seule (sans la chaîne électrique ELEC).

Ainsi, dans l'exemple illustré, le calculateur CALC transmet, pour le régime de décollage D, la marge ePMD et la marge PMD1 et, pour le régime transitoire T, la marge ePMT. Pour le régime continu C, le calculateur CALC transmet la marge PMC.

Au cours d'une étape 226, le dispositif d'affichage AF affiche les marges reçues. Il affiche également la puissance totale fournie par le système propulsif 102.

Par ailleurs, pendant le vol, le calculateur CALC est conçu pour que la puissance fournie par le système propulsif 102 soit en priorité attribué aux besoins de l'aéronef devant la recharge de la source de stockage électrique BAT (ex : puissance nécessaire aux rotors principal et anti-couple pour réaliser la manoeuvre commandée par le pilote). Lorsque la puissance fournie par la chaine thermique TH baisse, la recharge de la source de stockage électrique BAT est donc réduite pour assurer la disponibilité de puissance au pilote. Cette opération peut se faire de façon automatique de sorte que le pilote n'ait à s'occuper que du vol. Dans ce cas, il peut néanmoins être utile de fournir au pilote des informations synthétiques afin de l'aider à gérer la recharge de la source de stockage électrique BAT lorsque les conditions de vol le lui permettent (ex : en vol de croisière ou en descente à l'approche de l'atterrissage).

Pour cela, au cours d'une étape 228, le calculateur CALC calcule une puissance maximale de recharge de la source de stockage électrique BAT, par exemple à partir de paramètres mesurés comme l'état de charge SOC de la source de stockage électrique BAT, la température T_{BAT} de la source de stockage électrique BAT et la température atmosphérique T0. Cette puissance maximale de recharge est par exemple calculée par une fonction mathématique ou une table de valeurs dépendant des paramètres pertinents et enregistrés dans une mémoire accessible par le calculateur CALC. Cette limite peut être exprimée sous forme d'une puissance (en Watts), d'un courant électrique ou de toute autre grandeur ou unité de mesure choisie par le concepteur.

Au cours d'une étape 230, le calculateur CALC reçoit une mesure d'une puissance de recharge PR de la source de stockage électrique BAT.

Au cours d'une étape 232, le calculateur CALC calcule une différence entre la mesure de la puissance de recharge PR et la puissance maximale de recharge, cette différence formant une marge de puissance de recharge instantanée ΔPR.

Au cours d'une étape 234, le calculateur CALC transmet la marge de puissance de recharge instantanée ΔPR au dispositif d'affichage AF.

Au cours d'une étape 236, le dispositif d'affichage AF affiche la marge de puissance de recharge instantanée ΔPR au pilote.

Au cours d'une étape 238, le calculateur CALC calcule une différence entre un état de charge cible SOC* et une mesure SOC_m de l'état de charge SOC, cette différence formant une énergie restant à recharger. L'état de charge SOC peut être mesuré à l'aide de mesures de paramètres de la source de stockage électrique BAT (par exemple, la tension à ses bornes et le courant I_{BAT}) et d'un modèle mathématique de cette dernière.

Au cours d'une étape 240, le calculateur CALC calcule un profil de puissance maximum de recharge de la source de stockage électrique BAT jusqu'à l'état de charge cible SOC*. Ce profil peut être calculé à l'aide de mesures de paramètres de la source de stockage électrique BAT (par exemple, la tension à ses bornes et le courant I_{BAT}) et d'un modèle mathématique de cette dernière.

Au cours d'une étape 242, le calculateur CALC reçoit une mesure de la puissance de recharge PR de la source de stockage électrique BAT.

Au cours d'une étape 244, le calculateur CALC calcule un profil de puissance de recharge en sélectionnant pour chaque point le minimum entre le profil de puissance maximum de recharge et la puissance courante.

Au cours d'une étape 246, le calculateur CALC calcule un temps restant de recharge TR comme l'intégrale du rapport entre l'énergie restant à charger et le profil de puissance de recharge. En pratique, cette intégrale peut être calculée par le système de contrôle comme la somme des intervalles de la trajectoire de puissance discrétisée.

Au cours d'une étape 248, le calculateur CALC transmet le temps restant de recharge TR au dispositif d'affichage AF.

Au cours d'une étape 250, le dispositif d'affichage AF affiche le temps restant de recharge TR.

Par ailleurs, le turbomoteur TM présente une durée de vie (ou bien inversement, une vitesse d'endommagement) qui dépend de ses sollicitations en puissance. Cette durée de vie dépend principalement de la vitesse de rotation des ensembles tournants (par exemple, la vitesse NG du générateur de gaz, turbine libre : NTL/N2), et de la température T4x.

Deux modes d'endommagement sont généralement pris en compte : la fatigue cyclique et le fluage.

Ainsi, le calculateur CALC comporte un compteur de fatigue cyclique FC et un compteur de fluage EF.

La fatigue cyclique est induite par le stress mécanique provoqué par l'accélération centrifuge subie par les ensembles en rotation (compresseur(s), turbine(s) HP, turbine(s) BP).

Le compteur de fatigue cyclique FC est ainsi conçu pour compter des cycles de variation de la vitesse NG au cours du temps. Ces cycles comportent généralement, pour chaque mission (c'est-à-dire période pendant laquelle l'aéronef est allumé), un cycle principal entre le démarrage (vitesse NG nulle) et la vitesse maximale de la mission, ainsi que des cycles partiels pendant la mission.

Par exemple, le compteur de fatigue cyclique FC est conçu pour calculer, à chaque pas de temps, un incrément dC_FC à partir d'une mesure NG_m de la vitesse NG à ce pas de temps et d'un historique des mesures de la vitesse NG, en mettant en oeuvre une loi d'endommagement f1 prédéfinie : dC_FC = f1 (NG_m, mesures précédentes).

Le fluage caractérise la dilatation des pales de turbines du turbomoteur TM. Le fluage est causé par l'effet combiné de l'accélération centrifuge et de la température élevée auxquelles sont soumises les pièces en rotation. Il dépend donc de la puissance que le pilote demande au moteur et des conditions atmosphériques P0, T0.

Le compteur de fluage EF est ainsi conçu pour calculer, à chaque pas de temps, un incrément dC_EF à partir d'une mesure NG_m de la vitesse NG et d'une mesure T4x_m de la température T4x à ce pas de temps, en mettant en oeuvre une loi d'endommagement f2 prédéfinie : dC_EF = f2(NG_m, T4x_m).

Lorsqu'un des compteurs FC, EF atteint un seuil prédéfini (noté C_FC_max pour le compteur de fatigue cyclique FC et C_EF_max pour le compteur de fluage EF), une maintenance du turbomoteur TM doit être effectuée.

Pour permettre au pilote de gérer son vol pour atteindre une durée de vie souhaitée, les étapes suivantes peuvent être mises en oeuvre.

Au cours d'une étape 252, le dispositif de saisie SA reçoit la durée de vie cible DDV_cible du système propulsif 102, et la transmet au calculateur CALC. La durée de vie cible DDV_cible est par exemple saisie par le pilote et peut être ajustée par exemple avant chaque vol, en fonction d'un compromis entre le coût d'opération de l'aéronef et du service rendu sur la mission (charge embarquée et durée du vol).

Au cours d'une étape 254, le calculateur CALC reçoit la durée de vie cible DDV_cible.

Au cours d'une étape 256, le calculateur CALC calcule, pour chaque compteur FC, EF, une vitesse d'incrémentation maximale du compteur FC, EF reste sous un seuil prédéfini pendant toute la durée de vie cible DDV_cible.

Dans un premier exemple, la vitesse d'incrémentation maximale est calculée en considérant une usure linéaire sur toute la durée de vie cible DDV_cible. Ainsi, la vitesse d'incrémentation maximale dC_FC_max du compteur de fatigue cyclique FC est donnée par : dC_FC_max = C_FC_max / DDV_cible et la vitesse d'incrémentation maximale dC_EF_max du compteur de fluage EF est donnée par : dC_EF_max = C_EF_max / DDV_cible. Les vitesses d'incrémentation maximale sont donc constantes tant que la durée de vie cible DDV_cible n'est pas modifiée.

Dans un deuxième exemple, chaque vitesse d'incrémentation maximale est calculée de façon « dynamique », en fonction de l'utilisation passée du turbomoteur TM. Ainsi, chaque vitesse d'incrémentation maximale est calculée en considérant une usure linéaire à partir de la situation courante, valeur courante du compteur FC, EF et partie écoulée DDV_écoulée de la durée de vie cible DDV_cible. La vitesse d'incrémentation maximale dC_FC_max du compteur de fatigue cyclique FC est donnée par : dC_FC_max = (C_FC_max - C_FC_courante) / DDV_cible - DDV_écoulée) et la vitesse d'incrémentation maximale dC_EF_max du compteur de fluage EF est donnée par : dC_EF_max = (C_EF_max - C_EF_courante) / DDVcible - DDV_écoulée). Il sera apprécié que DDV_cible - DDV_écoulée équivaut à la durée de vie restante, notée DDV.

De cette manière, si le turbomoteur est régulièrement sollicité à de fortes puissances en début de mission (par exemple : utilisation à une puissance proche de la puissance PMD au décollage et pendant la montée), la vitesse d'incrémentation maximale est adaptée à la baisse afin d'inciter le pilote à moins solliciter le turbomoteur TM sur le reste du vol.

Au cours d'une étape 258, le calculateur CALC calcule un seuil NGmax_FC pour la vitesse NG à partir de la fonction f1 du compteur de fatigue cyclique FC et de vitesse d'incrémentation maximale du compteur de fatigue cyclique FC. Plus précisément, le seuil NGmax_FC est calculé en appliquant la loi inverse d'endommagement f1⁻¹ à la vitesse d'incrémentation maximale dC_FC_max, en connaissance l'historique des mesures : NGmax_FC = f1⁻¹(dC_FC_max).

Au cours d'une étape 260, le calculateur CALC calcule un seuil NGmax_EF pour la vitesse NG et un seuil T4xmax_EF pour la température T4xmax, à partir de la fonction f2 du compteur de fluage EF et de vitesse d'incrémentation maximale du compteur de fluage EF. Plus précisément, le seuil NGmax_EF et le seuil T4xmax_EF sont calculés en appliquant la loi inverse d'endommagement f2⁻¹ à la loi inverse d'endommagement f2⁻¹ d'incrémentation maximale : (NGmax_EF, T4xmax_EF) = f2⁻¹(dC_EF_max). Il sera apprécié que, la vitesse NG et la température T4x étant lié l'un à l'autre par le fonctionnement du turbomoteur TM, loi inverse d'endommagement f2⁻¹ donne une seule combinaison possible de NGmax_EF, T4xmax_EF.

Au cours d'une étape 262, le calculateur CALC calcule, à partir des seuils NGmax_FC, NGmax_EF, T4xmax_EF et à l'aide d'un modèle du turbomoteur TM, une borne supérieure PEsup d'une grandeur de fonctionnement du turbomoteur TM, par exemple une puissance fournie par le turbomoteur TM.

Par exemple, le calculateur CALC calcule, comme borne supérieure PEsup, la puissance mécanique que le turbomoteur TM peut fournir sans dépasser ces seuils NGmax_FC, NGmax_EF, T4xmax_EF, en utilisant un modèle du turbomoteur TM.

Au cours d'une étape 264, le calculateur CALC calcule une borne inférieure PEinf en utilisant la loi d'endommagement en cycles partiels.

Par exemple, le calculateur CALC calcule, comme borne inférieure PEinf, la puissance mécanique que le turbomoteur TM peut fournir sans passer sous ce seuil NGmin_FC, T4xmax_EF (en dehors d'un arrêt du turbomoteur TM), en utilisant un modèle du turbomoteur TM.

Au cours d'une étape 266, le calculateur CALC transmet au dispositif d'affichage AF une valeur courante de la puissance mécanique fournie par le système propulsif 102, la borne inférieure PEinf et la borne supérieure PEsup.

Au cours d'une étape 268, le dispositif d'affichage AF affiche la valeur courante de la puissance mécanique fournie, la borne inférieure PEinf et la borne supérieure PEsup.

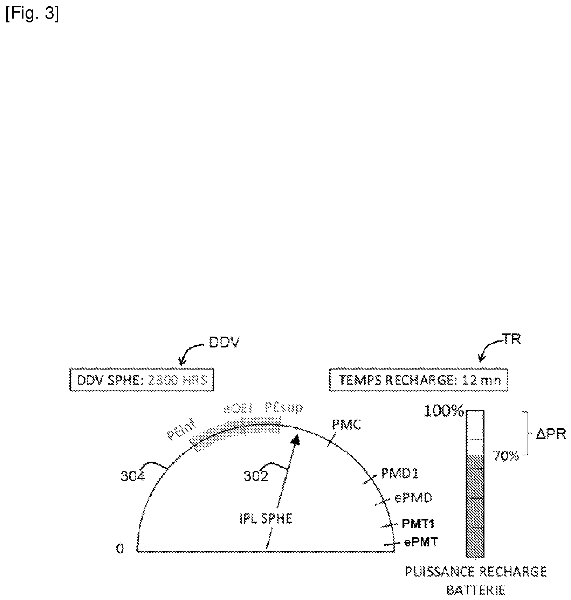

En référence à la figure 3, un exemple d'affichage du dispositif d'affichage AF est illustré.

Dans cet exemple, la puissance fournie par le système est indiquée par une aiguille rotative 302.

Les marges PMC, PMD1, ePMD, PMT1, ePMT sont indiquées comme marqueurs le long d'une course 304 de l'aiguille rotative 302, de même que la borne inférieure PEinf et la borne supérieure PEsup.

On notera par ailleurs que l'invention n'est pas limitée aux modes de réalisation décrits précédemment. Il apparaîtra en effet à l'homme de l'art que diverses modifications peuvent être apportées aux modes de réalisation décrits ci-dessus, à la lumière de l'enseignement qui vient de lui être divulgué, pourvu que ces modifications s'inscrivent dans le cadre de l'invention défini par les revendications qui suivent.

## Revendications

1. Procédé (200) mis en œuvre par ordinateur, de surveillance d'un système propulsif (102) d'un aéronef (100), le système propulsif (102) comportant un propulseur tournant (104) et une chaîne thermique (TH) d'entraînement du propulseur tournant (104), le système propulsif (102) comportant en outre une chaîne électrique (ELEC) d'entraînement du propulseur tournant (104) en parallèle de la chaîne thermique (TH), le procédé (200) comportant :
- un calcul (204) d'un seuil (NG_D, T4x_D, NG_T, T4x_T) d'un paramètre (NG, T4x) de la chaîne thermique (TH), en-dessous duquel ce paramètre (NG, T4x) doit rester pour que la chaîne thermique (TH) fournisse une puissance inférieure à une puissance maximale (PMD_{TH}, PMT_{TH}) prédéfinie ;
- un calcul (206) d'une marge du paramètre (NG, T4x) de la chaîne thermique (TH) par rapport à son seuil (NG_D, T4x_D, NG_T, T4x_T), cette marge étant prise comme marge (PMD1, PMT1) de la chaîne thermique (TH) ; et
- pour chacun d'au moins un paramètre (I_{BAT}, C_{M}) de la chaîne électrique (ELEC) :
• un calcul (208) d'un seuil (I_{BAT}_D, C_{M}_D, I_{BAT}_T, C_{M}_T) du paramètre (I_{BAT}, C_{M}) de la chaîne électrique (ELEC), en-dessous duquel ce paramètre (I_{BAT}, C_{M}) doit rester pour que la chaîne électrique (ELEC) fournisse une puissance inférieure à une puissance maximale prédéfinie ;
• un calcul (210) d'une marge, dite intermédiaire, du paramètre (I_{BAT}, C_{M}) de la chaîne électrique (ELEC) par rapport à son seuil (I_{BAT}_D, C_{M}_D, I_{BAT}_T, C_{M}_T) ;
le système propulsif (102) présentant au moins un régime de fonctionnement certifié qui définit une durée non nulle de fourniture de puissance pour la chaîne électrique (ELEC),
le procédé (200) comportant en outre, pour chaque régime :
- pour chaque paramètre (IBAT, CM) de la chaîne électrique (ELEC) :
• une vérification (214) qu'une source de stockage électrique (BAT) de la chaîne électrique (ELEC) est suffisamment chargée pour que la chaîne électrique (ELEC) puisse maintenir le paramètre à son seuil pendant la durée de fourniture de puissance définie ;
• si la source de stockage électrique est suffisamment chargée, la marge intermédiaire est prise comme marge du paramètre de la chaîne électrique (ELEC) ;
• si la source de stockage électrique (BAT) n'est pas suffisamment chargée, la marge du paramètre de la chaîne électrique (ELEC) est prise inférieure à sa marge intermédiaire ;
la marge du paramètre de la chaîne électrique (ELEC) ou, lorsque plusieurs paramètres de la chaîne électrique (ELEC) sont utilisés, la plus petite marge des paramètres de la chaîne électrique (ELEC), étant prise comme marge de la chaîne électrique (ELEC) ;
- une addition (222) de la marge (PMD1) de la chaîne thermique (TH) et de la marge de la chaîne électrique (ELEC) pour obtenir une marge totale (ePMD) du système propulsif (102) ; et
- une transmission (224) de la marge totale (ePMD) à un dispositif d'affichage (AF) de l'aéronef (100), pour que le dispositif d'affichage (AF) affiche la marge totale (ePMD).

2. Procédé (200) selon la revendication 1, dans lequel le système propulsif (102) présente au moins un régime de fonctionnement certifié (D, T) qui définit un seuil (NG_D, T4x_D, NG_T, T4x_T) pour chacun de plusieurs paramètres (NG, T4x) de la chaîne thermique (TH), le procédé (200) comportant :
- un calcul (206) d'une marge de chaque paramètre (NG, T4x) de la chaîne thermique (TH) ; et
- une détermination de la plus petite des marges des paramètres de la chaîne thermique (TH), cette plus petite marge étant prise comme marge de la chaîne thermique (TH).

3. Procédé selon la revendication 1 ou 2, dans lequel, si la source de stockage électrique (BAT) n'est pas suffisamment chargée, la marge du paramètre de la chaîne électrique (ELEC) est prise égale à zéro.

4. Procédé selon la revendication 1 ou 2, dans lequel, si la source de stockage électrique (BAT) n'est pas suffisamment chargée, la marge du paramètre de la chaîne électrique (ELEC) est prise égale à l'état de charge divisé par la durée de fourniture de puissance prédéfinie.

5. Procédé selon l'une quelconque des revendications 1 à 4, comportant en outre une transmission (224) de la marge (PMD1) de la chaîne thermique (TH) au dispositif d'affichage (AF) à un pilote de l'aéronef (100)

6. Programme d'ordinateur téléchargeable depuis un réseau de communication et/ou enregistré sur un support lisible par ordinateur, **caractérisé en ce qu'**il comprend les instructions pour l'exécution des étapes d'un procédé selon l'une quelconque des revendications 1 à 5, lorsque ledit programme est exécuté sur un ordinateur.

7. Aéronef (100) comportant :
- un système propulsif (102) d'un aéronef (100), le système propulsif (102) comportant un propulseur tournant (104), une chaîne thermique (TH) d'entraînement du propulseur tournant (104), et une chaîne électrique (ELEC) d'entraînement du propulseur tournant (104) en parallèle de la chaîne thermique (TH) ;
- un dispositif d'affichage (AF) ; et
- un calculateur (CALC) conçu pour mettre en œuvre :
• un calcul (204) d'un seuil (NG_D, T4x_D, NG_T, T4x_T) d'un paramètre (NG, T4x) de la chaîne thermique (TH), en-dessous duquel ce paramètre (NG, T4x) doit rester pour que la chaîne thermique (TH) fournisse une puissance inférieure à une puissance maximale (PMD_{TH}, PMT_{TH}) prédéfinie ;
• un calcul (206) d'une marge du paramètre (NG, T4x) de la chaîne thermique (TH) par rapport à son seuil (NG_D, T4x_D, NG_T, T4x_T), cette marge étant prise comme marge (PMD1, PMT1) de la chaîne thermique (TH) ; et
• pour chacun d'au moins un paramètre (I_{BAT}, C_{M}) de la chaîne électrique (ELEC) :
∘ un calcul (208) d'un seuil (I_{BAT}_D, C_{M}_D, I_{BAT}_T, C_{M}_T) du paramètre (I_{BAT}, C_{M}) de la chaîne électrique (ELEC), en-dessous duquel ce paramètre (I_{BAT}, C_{M}) doit rester pour que la chaîne électrique (ELEC) fournisse une puissance inférieure à une puissance maximale prédéfinie ;
∘ un calcul (210) d'une marge, dite intermédiaire, du paramètre (I_{BAT}, C_{M}) de la chaîne électrique (ELEC) par rapport à son seuil (I_{BAT}_D, C_{M}_D, I_{BAT}_T, C_{M}_T) ;
**caractérisé en ce que** le système propulsif (102) présente au moins un régime de fonctionnement certifié qui définit une durée non nulle de fourniture de puissance pour la chaîne électrique (ELEC), le calculateur (CALC) étant en outre conçu pour, pour chaque régime :
- pour chaque paramètre (IBAT, CM) de la chaîne électrique (ELEC) :
• vérifier (214) qu'une source de stockage électrique (BAT) de la chaîne électrique (ELEC) est suffisamment chargée pour que la chaîne électrique (ELEC) puisse maintenir le paramètre à son seuil pendant la durée de fourniture de puissance définie ;
• si la source de stockage électrique est suffisamment chargée, la marge intermédiaire est prise comme marge du paramètre de la chaîne électrique (ELEC) ;
• si la source de stockage électrique (BAT) n'est pas suffisamment chargée, la marge du paramètre de la chaîne électrique (ELEC) est prise inférieure à sa marge intermédiaire ;
la marge du paramètre de la chaîne électrique (ELEC) ou, lorsque plusieurs paramètres de la chaîne électrique (ELEC) sont utilisés, la plus petite marge des paramètres de la chaîne électrique (ELEC), étant prise comme marge de la chaîne électrique (ELEC) ;
- additionner (222) la marge (PMD1) de la chaîne thermique (TH) et la marge de la chaîne électrique (ELEC) pour obtenir une marge totale (ePMD) du système propulsif (102) ; et
- transmettre (224) la marge totale (ePMD) au dispositif d'affichage (AF) de l'aéronef (100), pour que le dispositif d'affichage (AF) affiche la marge totale (ePMD).

## Patentansprüche

1. Computerimplementiertes Verfahren (200) zum Überwachen eines Antriebssystems (102) eines Luftfahrzeugs (100), wobei das Antriebssystem (102) einen drehenden Propeller (104) und eine thermische Kette (TH) zum Antreiben des drehenden Propellers (104) umfasst, wobei das Antriebssystem (102) des Weiteren eine elektrische Kette (ELEC) zum Antreiben des drehenden Propellers (104) parallel zu der thermischen Kette (TH) umfasst, wobei das Verfahren (200) Folgendes umfasst:
- eine Berechnung (204) eines Schwellenwerts (NG_D, T4x_D, NG_T, T4x_T) eines Parameters (NG, T4x) der thermischen Kette (TH), unter dem dieser Parameter (NG, T4x) bleiben muss, damit die thermische Kette (TH) eine Leistung bereitstellt, die weniger als eine vordefinierte maximale Leistung (PMD_{TH}, PMT_{TH}) beträgt;
- eine Berechnung (206) eines Spielraums des Parameters (NG, T4x) der thermischen Kette (TH) in Bezug auf seinen Schwellenwert (NG_D, T4x_D, NG_T, T4x_T), wobei dieser Spielraum als Spielraum (PMD1, PMT1) der thermische Kette (TH) genommen wird; und
- für jeden von mindestens einem Parameter (I_{BAT}, C_{M}) der elektrischen Kette (ELEC):
- eine Berechnung (208) eines Schwellenwerts (I_{BAT}_D, C_{M}_D, I_{BAT}_T, C_{M}_T) des Parameters (I_{BAT}, C_{M}) der elektrischen Kette (ELEC), unter dem dieser Parameter (I_{BAT}, C_{M}) bleiben muss, damit die elektrische Kette (ELEC) eine Leistung bereitstellt, die weniger als eine vordefinierte maximale Leistung beträgt;
- eine Berechnung (210) eines Zwischenspielraums des Parameters (I_{BAT}, C_{M}) der elektrischen Kette (ELEC) in Bezug auf seinen Schwellenwert (I_{BAT}_D, C_{M}_D, I_{BAT}_T, C_{M}_T);
wobei das Antriebssystem (102) mindestens einen zertifizierten Betriebsdrehzahlbereich aufweist, der eine Dauer ungleich Null der Bereitstellung von Leistung für die elektrische Kette (ELEC) definiert, wobei das Verfahren (200) des Weiteren für jeden Drehzahlbereich Folgendes umfasst:
- für jeden Parameter (IBAT, CM) der elektrischen Kette (ELEC):
- eine Verifizierung (214), dass eine elektrische Speicherquelle (BAT) der elektrischen Kette (ELEC) ausreichend aufgeladen ist, damit die elektrische Kette (ELEC) während der Dauer der Bereitstellung der definierten Leistung den Parameter bei seinem Schwellenwert aufrechterhalten kann;
- wenn die elektrische Speicherquelle ausreichend aufgeladen ist, der Zwischenspielraum als Spielraum des Parameters der elektrischen Kette (ELEC) genommen wird;
- wenn die elektrische Speicherquelle (BAT) nicht ausreichend aufgeladen ist, der Spielraum des Parameters der elektrischen Kette (ELEC) als geringer als sein Zwischenspielraum genommen wird;
wobei der Spielraum des Parameters der elektrischen Kette (ELEC), oder wenn mehrere Parameter der elektrischen Kette (ELEC) verwendet werden, der kleinste Spielraum der Parameter der elektrischen Kette (ELEC), als Spielraum der elektrischen Kette (ELEC) genommen wird;
- eine Addition (222) des Spielraums (PMD1) der thermischen Kette (TH) und des Spielraums der elektrischen Kette (ELEC), um eines Gesamtspielraums (ePMD) des Antriebssystems (102) zu erhalten; und
- eine Übertragung (224) des Gesamtspielraums (ePMD) an eine Anzeigevorrichtung (AF) des Luftfahrzeugs (100), damit die Anzeigevorrichtung (AF) den Gesamtspielraum (ePMD) anzeigt.

2. Verfahren (200) nach Anspruch 1, wobei das Antriebssystem (102) mindestens eine zertifizierte Betriebsbedingung (D, T) aufweist, die für jeden der mehreren Parameter (NG, T4x) der thermischen Kette (TH) einen Schwellenwert (NG_D, T4x_D, NG_T, T4x_T) definiert, wobei das Verfahren Folgendes umfasst:
- eine Berechnung (206) eines Spielraums von jedem Parameter (NG, T4x) der thermischen Kette (TH); und
- eine Bestimmung des kleinsten der Spielräume der Parameter der thermischen Kette (TH), wobei dieser kleinste Spielraum als Spielraum der thermische Ketten (TH) genommen wird.

3. Verfahren nach Anspruch 1 oder 2, wobei, wenn die elektrische Speicherquelle (BAT) nicht ausreichend aufgeladen ist, der Spielraum des Parameters der elektrischen Kette (ELEC) als gleich Null genommen wird.

4. Verfahren nach Anspruch 1 oder 2, wobei, wenn die elektrische Speicherquelle (BAT) nicht ausreichend aufgeladen ist, der Spielraum des Parameters der elektrischen Kette (ELEC) als gleich dem Ladezustand geteilt durch die Dauer der Bereitstellung der vordefinierten Leistung genommen wird.

5. Verfahren nach einem der Ansprüche 1 bis 4, umfassend des Weiteren eine Übertragung (224) des Spielraums (PMD1) der thermischen Kette (TH) zu der Anzeigevorrichtung (AF) an einen Piloten des Luftfahrzeugs (100).

6. Computerprogramm, das von einem Kommunikationsnetzwerk herunterladbar und/oder auf einem computerlesbaren Träger aufgezeichnet ist, **dadurch gekennzeichnet, dass** es Anweisungen für die Ausführung der Schritte eines Verfahrens nach einem der Ansprüche 1 bis 5, wenn das Programm auf einem Computer ausgeführt wird, umfasst.

7. Luftfahrzeug (100), umfassend:
- ein Antriebssystem (102) eines Luftfahrzeugs (100), wobei das Antriebssystem (102) einen drehenden Propeller (104), eine thermische Kette (TH) zum Antreiben des drehenden Propellers (104) und eine elektrische Kette (ELEC) zum Antreiben des drehenden Propellers (104) parallel zu der thermischen Kette (TH) umfasst;
- eine Anzeigevorrichtung (AF); und
- einen Rechner (CALC), konzipiert zum Implementieren:
- einer Berechnung (204) eines Schwellenwerts (NG_D, T4x_D, NG_T, T4x_T) eines Parameters (NG, T4x) der thermischen Kette (TH), unter dem dieser Parameter (NG, T4x) bleiben muss, damit die thermische Kette (TH) eine Leistung bereitstellt, die weniger als eine vordefinierte maximale Leistung (PMD_{TH}, PMT_{TH}) beträgt;
- einer Berechnung (206) eines Spielraums des Parameters (NG, T4x) der thermischen Kette (TH) in Bezug auf seinen Schwellenwert (NG_D, T4x_D, NG_T, T4x_T), wobei dieser Spielraum als Spielraum (PMD1, PMT1) der thermische Kette (TH) genommen wird; und
- für jeden von mindestens einem Parameters (I_{BAT}, C_{M}) der elektrischen Kette (ELEC):
- einer Berechnung (208) eines Schwellenwerts (I_{BAT}_D, C_{M}_D, I_{BAT}_T, C_{M}_T) des Parameters (I_{BAT}, C_{M}) der elektrischen Kette (ELEC), unter dem dieser Parameter (I_{BAT}, C_{M}) bleiben muss, damit die elektrische Kette (ELEC) eine Leistung bereitstellt, die weniger als eine vordefinierte maximale Leistung beträgt;
- einer Berechnung (210) eines Zwischenspielraums des Parameters (I_{BAT}, C_{M}) der elektrischen Kette (ELEC) in Bezug auf seinen Schwellenwert (I_{BAT}_D, C_{M}_D, I_{BAT}_T, C_{M}_T);
**dadurch gekennzeichnet, dass** das Antriebssystem (102) mindestens einen zertifizierten Betriebsdrehzahlbereich aufweist, der eine Dauer ungleich Null der Bereitstellung von Leistung für die elektrische Kette (ELEC) definiert, wobei der Rechner (CALC) des Weiteren konzipiert ist, um, für jeden Drehzahlbereich:
- für jeden Parameter (IBAT, CM) der elektrischen Kette (ELEC):
- zu verifizieren (214), dass eine elektrische Speicherquelle (BAT) der elektrischen Kette (ELEC) ausreichend aufgeladen ist, damit die elektrische Kette (ELEC) während der Dauer der Bereitstellung der definierten Leistung den Parameter bei seinem Schwellenwert aufrechterhalten kann;
- wenn die elektrische Speicherquelle ausreichend aufgeladen ist, der Zwischenspielraum als Spielraum des Parameters der elektrischen Kette (ELEC) genommen wird;
- wenn die elektrische Speicherquelle (BAT) nicht ausreichend aufgeladen ist, der Spielraum des Parameters der elektrischen Kette (ELEC) als geringer als sein Zwischenspielraum genommen wird;
wobei der Spielraum des Parameters der elektrischen Kette (ELEC), oder wenn mehrere Parameter der elektrischen Kette (ELEC) verwendet werden, der kleinste Spielraum der Parameter der elektrischen Kette (ELEC), als Spielraum der elektrischen Kette (ELEC) genommen wird;
- den Spielraum (PMD1) der thermische Kette (TH) und den Spielraum der elektrischen Kette (ELEC), um eines Gesamtspielraums (ePMD) des Antriebssystems (102) zu erhalten, addieren (222); und
- den Gesamtspielraum (ePMD) an eine Anzeigevorrichtung (AF) des Luftfahrzeugs (100) übertragen (224), damit die Anzeigevorrichtung (AF) den Gesamtspielraum (ePMD) anzeigt.

## Claims

1. A computer-implemented method (200) for monitoring a propulsion system (102) of an aircraft (100), the propulsion system (102) comprising a rotating propulsion unit (104) and a thermal chain (TH) for driving the rotating propulsion unit (104), the propulsion system (102) further comprising an electrical chain (ELEC) for driving the rotating propulsion unit (104) in parallel with the thermal chain (TH), the method (200) comprising:
- computing (204) a threshold (NG_D, T4x_D, NG_T, T4x_T) of a parameter (NG, T4x) of the thermal chain (TH), below which this parameter (NG, T4x) must remain so that the thermal chain (TH) supplies a power lower than a predefined maximum power (PMD_{TH}, PMT_{TH});
- computing (206) a margin of the parameter (NG, T4x) of the thermal chain (TH) with respect to its threshold (NG_D, T4x_D, NG_T, T4x_T), this margin being taken as the margin (PMD1, PMT1) of the thermal chain (TH); and
- for each of at least one parameter (I_{BAT}, C_{M}) of the electrical chain (ELEC):
• computing (208) a threshold (I_{BAT}_D, C_{M}_D, I_{BAT}_T, C_{M}_T) of the parameter (I_{BAT}, C_{M}) of the electrical chain (ELEC), below which this parameter (I_{BAT}, C_{M}) must remain so that the electrical chain (ELEC) supplies a power lower than a predefined maximum power;
• computing (210) a margin, said intermediate margin, of the parameter (I_{BAT}, C_{M}) of the electrical chain (ELEC) with respect to its threshold (I_{BAT}_D, C_{M}_D, I_{BAT}_T, C_{M}_T);
**characterized in that** the propulsion system (102) having at least one certified operating speed which defines a non-zero duration of power supply for the electrical chain (ELEC), the method (200) further comprising, for each certified operating speed:
- for each parameter (I_{BAT}, C_{M}) of the electrical chain (ELEC):
• checking (214) that an electrical storage source (BAT) of the electrical chain (ELEC) is sufficiently charged so that the electrical chain (ELEC) can maintain the parameter with the smallest margin at its threshold during the defined power supply duration;
• if the electrical storage source is sufficiently charged, the intermediate margin is taken as the margin of the parameter of the electrical chain (ELEC);
• if the electrical storage source (BAT) is not sufficiently charged, the margin of the parameter of the electrical chain (ELEC) is taken inferior to its intermediate margin;
the margin of the parameter of the electrical chain (ELEC) or, when several parameters of the electrical chain (ELEC) are used, the smaller margin of the parameters of the electrical chain (ELEC), being taken as the margin of the electrical chain (ELEC);
- adding together (222) the margin (PMD1) of the thermal chain (TH) and the margin of the electrical chain (ELEC) so as to obtain a total margin (ePMD) of the propulsion system (102); and
- transmitting (224) the total margin (ePMD) to a display device (AF) in the aircraft (100), so that the display device (AF) displays the total margin (ePMD).

2. The method (200) according to claim 1, wherein the propulsion system (102) has at least one certified operating speed (D, T) which defines a threshold (NG_D, T4x_D, NG_T, T4x_T) for each of several parameters (NG, T4x) of the thermal chain (TH), the method (200) comprising:
- computing (206) a margin for each parameter (NG, T4x) of the thermal chain (TH); and
- determining the smallest of the margins of the parameters of the thermal chain (TH), this smallest margin being taken as the margin of the thermal chain (TH).

3. The method according to claim 1 or 2, wherein, if the electrical storage source (BAT) is not sufficiently charged, the margin of the parameter of the electrical chain (ELEC) is taken to be zero.

4. The method according to claim 1 or 2, wherein, if the electrical storage source (BAT) is not sufficiently charged, the margin of the parameter of the electrical chain (ELEC) is taken to be equal to the state of charge divided by the predefined power supply duration.

5. The method according to any one of claims 1 to 4, further comprising transmitting (224) the margin (PMD1) of the thermal chain (TH) to the display device (AF) to a pilot in the aircraft (100)

6. A computer program which can be downloaded from a communications network and/or recorded on a computer-readable medium, **characterised in that** it comprises instructions for executing the steps of a method according to any one of claims 1 to 5, when said program is executed on a computer.

7. An aircraft (100) comprising:
- a propulsion system (102) of an aircraft (100), the propulsion system (102) comprising a rotating propulsion unit (104), a thermal chain (TH) for driving the rotating propulsion unit (104), and an electrical chain (ELEC) for driving the rotating propulsion unit (104) in parallel with the thermal chain (TH);
- a display device (AF); and
- a computer (CALC) designed to implement:
• computing (204) a threshold (NG_D, T4x_D, NG_T, T4x_T) of a parameter (NG, T4x) of the thermal chain (TH), below which this parameter (NG, T4x) must remain so that the thermal chain (TH) supplies a power lower than a predefined maximum power (PMD_{TH}, PMT_{TH});
• computing (206) a margin of the parameter (NG, T4x) of the thermal chain (TH) with respect to its threshold (NG_D, T4x_D, NG_T, T4x_T), this margin being taken as the margin (PMD1, PMT1) of the thermal chain (TH);
• for each of at least one parameter (I_{BAT}, C_{M}) of the electrical chain (ELEC):
• computing (208) a threshold (I_{BAT}_D, C_{M}_D, I_{BAT}_T, C_{M}_T) of the parameter (I_{BAT}, C_{M}) of the electrical chain (ELEC), below which this parameter (I_{BAT}, C_{M}) must remain so that the electrical chain (ELEC) supplies a power lower than a predefined maximum power (PMD_{ELEC}, PMT_{ELEC});
• computing (210) a margin, said intermediate margin, of the parameter (I_{BAT}, C_{M}) of the electrical chain (ELEC) with respect to its threshold (I_{BAT}_D, C_{M}_D, I_{BAT}_T, C_{M}_T);
**characterized in that** the propulsion system (102) has at least one certified operating speed (D) which defines a non-zero duration of power supply for the electrical chain (ELEC), the computer (CALC) also being designed to, for each speed:
• for each parameter (I_{BAT}, C_{M}) of the electrical chain (ELEC):
• checking (214) that an electrical storage source (BAT) of the electrical chain (ELEC) is sufficiently charged so that the electrical chain (ELEC) can maintain the parameter with the smallest margin at its threshold during the defined power supply duration;
• if the electrical storage source is sufficiently charged, the intermediate margin is taken as the of the electrical chain (ELEC);
• if the electrical storage source (BAT) is not sufficiently charged, the margin of the parameter of the electrical chain (ELEC) is taken smaller than its intermediate margin;
the margin of the parameter of the electrical chain (ELEC) or, when several parameters of the electrical chain (ELEC) are used, the smaller margin of the parameters of the electrical chain (ELEC), being taken as the margin of the electrical chain (ELEC);
• adding (222) together the margin (PMD1) of the thermal chain (TH) and the margin (ΔP_{ELEC}_D) of the electrical chain (ELEC) so as to obtain a total margin (ePMD) of the propulsion system (102); and
• transmitting (224) the total margin (ePMD) to the display device (AF) in the aircraft (100), so that the display device (AF) displays the total margin (ePMD).
